# EUROPÄISCHE PATENTSCHRIFT

(11) **EP 1 690 925 B1**
(45) Veröffentlichungstag und Bekanntmachung des Hinweises auf die Patenterteilung: **26.08.2009**
(21) Anmeldenummer: 06001052.7
(22) Anmeldetag: 18.01.2006
(51) Int. Cl.: C12C 12/00

(54) **Mischbier**
Beer mix
Mélange de bières

(30) Priorität: 03.02.2005 DE 102005004874; 07.11.2005 DE 202005017337 U
(43) Veröffentlichungstag der Anmeldung: 16.08.2006
(73) Patentinhaber: Brandl, Hubert, 85276 Pfaffenhofen (DE)
(72) Erfinder: Brandl, Hubert, 85276 Pfaffenhofen (DE)
(74) Vertreter: Tetzner, Michael

(56) Entgegenhaltungen:
- EP-A- 0 360 007
- EP-A- 1 619 238
- WO-A-20/04005449
- DE-A1- 19 525 793
- US-A- 464 021
- GREG WALZ: "Cream Ale" INTERNET ARTICLE, [Online] 24. Februar 1996 (1996-02-24), XP002308097 Gefunden im Internet: URL:www.gurmania.sk/beer/berjuge.htm> [gefunden am 2004-11-29]
- ANDREW J. WORTH: HOMEBREW DIGEST 739, [Online] 7. Oktober 1991 (1991-10-07), XP002308098 Gefunden im Internet: URL:http://hbd.org/hbd/archive/739.html> [gefunden am 2004-11-29]

## Beschreibung

Die Erfindung betrifft ein Verfahren zur Herstellung eines Mischbieres.

Aus dem Internet ist auf der Seite
http://web.archive.org/web/20041010172603/http://www.neue-szene.de/szene_specials/spezial-biergarten/content-rezepte.htm
eine Biermischung zweier untergäriger Biersorten bekannt, die zu gleichen Teilen aus Pils und hellem Bier bzw. Pils und Malzbier besteht.

Ferner ist eine Mischung aus "Ale" und "Lager" aus folgenden Veröffentlichungen bekannt: US 464,021 sowie GREG WALZ: "Cream Ale" INTERNET ARTICLE, [Online] 24. Februar 1996 (1996-02-24), XP002308097 gefunden im Internet: URL:www.gurmania.sk/beer/nerjuge.htm und ANDREW J. WORTH: HOMEBREW DIGEST 739, [Online] 7. Oktober 1991 (1991-10-07), XP002308098 gefunden im Internet: URL: http://hbd.org/hbd/archive/739.html.

Außerdem betrifft die EP-A-0 360 007 ein Bier, welches auf Roggenbasis hergestellt wird. Weiterhin sind in der DE-A-195 25 793 und der WO 2004/005449 Mischgetränke aus Cola und Weizenbier bzw. Bier mit Wein, Sekt und Champagnerhefe bekannt.

Der Erfindung liegt nun die Aufgabe zugrunde, ein Verfahren zur Herstellung eines geschmacklich gesehen verfeinerten und verbesserten Mischbieres anzugeben.

Erfindungsgemäß wird diese Aufgabe durch die Merkmale des Anspruches 1 gelöst.

Beim erfindungsgemäßen Verfahren zur Herstellung des Mischbieres werden eine untergärige Biersorte mit einer obergärigen Biersorte vermischt, wobei der Anteil der untergärigen Biersorte 10 bis 90 % beträgt, während der restliche Anteil des Mischbieres die obergärige Biersorte darstellt und wobei die eine der beiden Biersorten vor der Vermischung mit der fertig gebrauten anderen Biersorte kurz vor dem Endvergärungsgrad steht.

In Deutschland ist das untergärige Pilsbier die beim Verbraucher beliebteste Biersorte. Die am häufigsten gekaufte obergärige Biersorte stellt das Weißbier bzw. Weizenbier dar. Während das Pilsbier vom Geschmack eher herb und hopfenbetont ist, hat das Weißbier einen fruchtigen und würzigen Geschmack. Da beim Menschen die Geschmacksknospen für bittere bzw. herbe Geschmackseindrücke im hinteren Teil der menschlichen Zunge liegen, verfügt Pilsbier über einen geschmacklich gesehen starken Abgang. Demgegenüber hinterlässt Weizenbier kaum einen Abgang, bietet aber aufgrund der Tatsache, dass fruchtige und würzige Geschmackseindrücke im vorderen bis mittleren Teil der Zunge wahrgenommen bzw. mit dem Geruchssinn aufgenommen werden, insbesondere im ersten Augenblick des Trinkgenusses, ein hohes Geschmacks- bzw. Geruchserlebnis.

In Österreich ist das untergärige Märzenbier (vergleichbar mit dem deutschen Lagerbier) die beim Verbraucher beliebteste Biersorte. Die am häufigsten gekaufte obergärige Biersorte stellt wiederum das Weißbier bzw. das Weizenbier dar. Während das Märzenbier vom Geschmack malzaromatisch und teilweise ein wenig süß ist, hat das Weißbier einen fruchtigen und würzigen Geschmack.

Ein Mischbier, welches die beiden geschmacklichen Vorteile einer untergärigen Biersorte (beispielsweise Pils oder Märzen- bzw. Lagerbier) und einer obergärigen Biersorte (beispielsweise Weißbier) zur gleichen Zeit bietet, ist bisher auf dem Biermarkt nicht vorhanden. Ein solches geschmacklich gesehen verfeinertes und verbessertes Produkt würde beim Verbraucher aber sicherlich hohen Anklang finden.

Weitere Vorteile der Erfindung sind Gegenstand der Unteransprüche.

Aus der nachfolgenden Tabelle sind beispielhaft verschiedene untergärige und obergärige Biersorten angeführt, die miteinander kombiniert werden könnten.

| **Untergärige Biersorte** | **Obergärige Biersorte** |
|---|---|
| Helles Vollbier (= auch Lager hell) | Weizenbier hell |
| Helles Leichtbier | Weizenbier dunkel |
| Hell Export | Weizenbier leicht |
| Dunkel | Weizenbier alkoholfrei |
| Dunkel Export | Weizenbier Kristall |
| Schwarzbier | Altbier |
| Märzenbier (Festbier) | Kölsch |
| Bockbier (Starkbier) | Berliner Weisse |
| Pils/Pilsener | |
| Diätbier | |
| Radler (Helles mit Zitronenlimonade) | |

Prinzipiell bietet die Mischung einer untergärigen Biersorte mit einer obergärigen Biersorte den Vorteil, dass die Vorzüge beider Biersorten in einem Bier untergebracht werden können. Bei den durchgeführten Geschmackstests hat jeweils eine Beimischung von 50 % der beiden Biersorten einen exzellenten Geschmack des Mischproduktes ergeben. Allerdings hat man auch bei einem Anteil der untergärigen Biersorte von 10 bis 90 % ebenfalls sehr gut schmeckende Endprodukte erhalten.

Bei den der Erfindung zugrunde liegenden Versuchen hat sich die Kombination eines Pilsbieres mit einem Weizenbier bzw. die Kombination eines Märzen- bzw. Lagerbieres mit einem Weizenbier als eine geschmacklich besonders vorteilhafte Kombination herausgestellt.

Wenn wenigstens eine der beiden Biersorten alkoholreduziert oder alkoholfrei ist, können auch Verbraucher ein geschmacksverfeinertes Bier konsumieren, welche nur wenig oder keinen Alkohol zu sich nehmen dürfen oder wollen.

Die Herstellung des Mischbieres erfolgt dadurch, dass die obergärige Biersorte (beispielsweise ein Weißbier) vor der Vermischung mit der fertig gebrauten untergärigen Biersorte (beispielsweise einem Pilsbier oder einem Märzenbier) kurz vor dem Endvergärungsgrad steht. Selbstverständlich kann auch die untergärige Biersorte (beispielsweise einem Pilsbier oder einem Märzenbier) kurz vor dem Endvergärungsgrad stehen, wenn sie mit der fertig gebrauten obergärigen Biersorte (beispielsweise ein Weißbier) vermischt wird. Dadurch kann für eine optimale Vermischung beider Produkte die im Gärbottich bestehenden Gärungswallungen ausgenutzt werden. Die kurz vor dem Endvergärungsgrad stehende Biersorte weist zweckmäßigerweise einen Vergärungsgrad zwischen 65 und 75 % auf.

## Patentansprüche

1. Verfahren zur Herstellung eines Mischbiers, wobei eine untergärige Biersorte mit einer obergärigen Biersorte vermischt werden, wobei der Anteil der untergärigen Biersorte 10 bis 90 % beträgt, während der restliche Anteil des Mischbieres die obergärige Biersorte darstellt, **dadurch gekennzeichnet, dass** die eine der beiden Biersorten vor der Vermischung mit der fertig gebrauten anderen Biersorte kurz vor dem Endvergärungsgrad steht, wobei die im Gärbottich bestehenden Gärungswallungen für eine optimale Vermischung beider Produkte ausgenutzt werden.

2. Verfahren nach Anspruch 1, **dadurch gekennzeichnet, dass** die kurz vor dem Endvergärungsgrad stehende obergärige bzw. untergärige Biersorte einen Vergärungsgrad zwischen 65 bis 75 % aufweist, wenn sie mit der fertig gebrauten anderen Biersorte vermischt wird.

3. Verfahren nach Anspruch 1, **dadurch gekennzeichnet, dass** für die untergärige Biersorte ein Pilsbier, ein Märzen oder ein Lagerbier und für die obergärige Biersorte ein Weißbier bzw. ein Weizenbier verwendet wird.

4. Verfahren nach Anspruch 1, **dadurch gekennzeichnet, dass** wenigstens eine Biersorte verwendet wird, die alkoholreduziert oder alkoholfrei ist.

## Claims

1. A method of producing a mixed beer, wherein a bottom-fermented beer variety is mixed with a top-fermented beer variety, wherein the proportion of the bottom-fermented beer variety is 10% to 90%, while the top-fermented beer variety constitutes the remainder of the mixed beer, **characterised in that** one of the two beer varieties is just before its final fermentation level before being mixed with the ready-brewed other beer variety, wherein the fermentation surges arising in the fermentation vat are utilised for optimum mixing of the two products.

2. A method according to claim 1, **characterised in that** the top-fermented or bottom-fermented beer variety that is just before its final fermentation level has a fermentation level of between 65% and 75% when it is mixed with the ready-brewed other beer variety.

3. A method according to claim 1, **characterised in that** a Pils, a Märzen or a lager beer is used for the bottom-fermented beer variety and a white beer or a wheat beer is used for the top-fermented beer variety.

4. A method according to claim 1, **characterised in that** at least one low-alcohol or alcohol-free beer variety is used.

## Revendications

1. Procédé pour la fabrication d'un mélange de bières, dans lequel une sorte de bière à basse fermentation est mélangée avec une bière à haute fermentation, la part de la sorte de bière à basse fermentation étant de 10 à 90 %, tandis que la part restante du mélange de bières est représentée par la sorte de bière à haute fermentation, **caractérisé en ce que** l'une des deux sortes de bière est presque en fin de fermentation avant d'être mélangée à l'autre sorte de bière fraîchement brassée, les effervescences, dues à la fermentation, qui se produisent dans la cuve de fermentation, étant exploitées pour un mélange optimal des deux produits.

2. Procédé selon la revendication 1, **caractérisé en ce que** la sorte de bière à haute fermentation, respectivement à basse fermentation ayant presque atteint le degré de fermentation final présente un degré de fermentation situé entre 65 et 75 %, quand on la mélange avec les autres sortes de bière brassées à point.

3. Procédé selon la revendication 1, **caractérisé en ce que** l'on utilise en tant que sorte de bière à basse fermentation une pils, une bière de mars ou une bière de garde, et en tant que sorte de bière à haute fermentation une bière blanche, respectivement une bière de froment.

4. Procédé selon la revendication 1, **caractérisé en ce que** la sorte de bière au moins utilisée est une bière à teneur en alcool réduite ou sans alcool.
